# EUROPEAN PATENT SPECIFICATION

(11) **EP 1 908 994 B1**
(45) Date of publication and mention of the grant of the patent: **14.03.2012**
(21) Application number: 07253741.8
(22) Date of filing: 21.09.2007
(51) Int. Cl.: F16H 57/02, F16H 9/18, F16H 57/04

(54) **Belt type continuously variable transmission**
Kontinuierlich variable Übertragung über ein Band
Transmission variable continue par type courroie

(30) Priority: 26.09.2006 JP 2006260952
(43) Date of publication of application: 09.04.2008
(73) Proprietor: Yamaha Hatsudoki Kabushiki Kaisha, Iwata-shi, Shizuoka 438-8501 (JP)
(72) Inventor: Sugitani, Tsuyoshi c/o Yamaha Hatsudoki Kabushiki Kaisha, Iwata-shi Shizuoka-ken 438-8501 (JP); Takebe, Mitsukazu c/o Yamaha Hatsudoki Kabushiki Kaisha, Iwata-shi Shizuoka-ken 438-8501 (JP)
(74) Representative: Moreland, David

(56) References cited:
- US-A1- 2004 171 449
- US-A1- 2005 229 742

## Description

### FIELD OF THE INVENTION

The present invention relates to a belt type continuously variable transmission for, for example, a straddle-type vehicle (for example, motorcycle) and a vehicle comprising a belt type continuously variable transmission.

### BACKGROUND TO THE INVENTION

V-belt type continuously variable transmissions are widely used in straddle-type vehicles such as scooter type motorcycle, etc. Typical V-belt type continuously variable transmissions are composed of a primary sheave and a secondary sheave, which are variable in groove width and respectively arranged on a primary shaft, into which output of a power source such as engine, etc. is input, and a secondary shaft, which delivers power to a drive wheel. The respective diameters at which a V-belt is wound round the respective sheaves are regulated by winding the V-belt round the sheaves and using a groove width regulating mechanism to vary groove widths of the respective sheaves, whereby a transmission gear ratio is controlled steplessly between the sheaves.

Normally, the primary and secondary sheaves each comprise a stationary flange and a moving flange, which define a V-groove therebetween, and the respective moving flanges are provided to be movable axially on a respective primary and secondary shaft. A groove width regulating mechanism shifts the moving flange, thereby enabling regulating a transmission gear ratio steplessly.

US2004/0171449 describes an engine case having a V-belt continuously variable transmission (CVT) on one side. The CVT is located in a transmission case and constituted by a V-belt routed round a drive pulley and a driven pulley, the drive pulley being attached to one end of a crankshaft. A crankcase of the engine has a first crank support wall portion 40c for supporting a left crank journal portion on a left side journal bearing and a second support wall for supporting a right crank journal portion of the crankshaft on a right side journal bearing. One end of the crankshaft is projected in cantilever fashion from the engine case into the transmission case and the drive pulley is attached to the projected portion.

One type of V-belt type continuously variable transmission includes an electric motor for moving the moving flange of the primary sheave to regulate the primary sheave groove width. With such belt type continuously variable transmissions, shift thrust of an electric motor enables shift of a moving flange in a direction in which a primary sheave is narrowed in groove width (Top side), and a direction in which the groove width is widened (Low side), so that it is possible to freely regulate the groove width of the primary sheave. Such transmissions are disclosed in JP-A-04-131558, JP-A-04-210156 and JP-A-62-175228

In existing transmission arrangements of the type described above, it is known for the transmission assembly to be directly secured to an engine. However, abrasion may occur at locations where, for example, an engine crank portion operates in proximity to a case of the transmission. The inventors have identified a new problem which causes increased levels of abrasion between components such as the engine crank portion and the transmission case. This is discussed below.

The general arrangement of a belt type transmission is described above in which a primary sheave is mounted on a primary shaft which receives power from an engine through a crank portion. The primary sheave includes a fixed flange which is fixed relative to the shaft, and a moving flange which can be axially moved relative to the shaft. A groove is defined between the fixed and moving flanges which receives an endless belt. The endless belt also engages a secondary sheave and thus permits rotation of the primary sheave to be transmitted to the secondary sheave to drive a wheel. However, the inventors have identified that when the belt is under tension this applies an axial force on the flanges of the primary sheave to effectively force these flanges apart. As the fixed flange is secured to the shaft then this can result in axial movement of the shaft and thus can move components of the primary shaft, particularly the crank portion, closer to the transmission case and contact may result.

Additionally, as sections of the shaft may be supported by the transmission case then movement of the shaft, and indeed of the flanges of the primary sheave may also result in movement of the transmission case. This additional movement may also increase the level of contact and abrasion between the crank portion and the case.

A belt type continuously variable transmission according to the invention has been thought of in order to suppress the abrasion described above.

### SUMMARY OF THE INVENTION

According to a first aspect of the present invention there is provided a belt type continuously variable transmission comprising the features of claim 1.

Other embodiments are defined in the dependent claims.

### BRIEF DESCRIPTION OF THE DRAWINGS

These and other aspects of the present invention will now be described, by way of example only, with reference to the accompanying drawings, in which:
Fig. 1 is a cross sectional, side view showing a portion of a belt type continuously variable transmission for a vehicle;
Fig. 2 is a cross sectional, side view showing a construction of a belt type continuously variable transmission for a vehicle , on a side of a primary shaft;
Fig. 3 is a cross sectional, side view showing a construction of the belt type continuously variable transmission , on a side of a secondary shaft;
Fig. 4 is a cross sectional, side view showing that portion of the belt type continuously variable transmission , to which a primary sheave is mounted;
Fig. 5 is a cross sectional, side view showing a construction of the belt type continuously variable transmission , on a side of a primary shaft in a state in which a primary sheave is wide in groove width;
Fig. 6 is a cross sectional, side view showing a construction of the belt type continuously variable transmission , on a side of a secondary shaft in a state, in which a primary sheave is wide in groove width;
Fig. 7 is a cross sectional, side view showing that portion of a belt type continuously variable transmission for a vehicle, to which a primary sheave is mounted;
Fig. 8 is a cross sectional, side view showing that portion of a belt type continuously variable transmission for a vehicle, to which a primary sheave is mounted;
Fig. 9 is a cross sectional, side view showing that portion of a belt type continuously variable transmission for a vehicle according to the invention, to which a primary sheave is mounted; and
Fig. 10 is a cross sectional, side view showing that portion of a belt type continuously variable transmission for a vehicle according to the invention, to which a primary sheave is mounted.

### DETAILED DESCRIPTION OF THE DRAWINGS

A belt type continuously variable transmission for a vehicle according to embodiments of the invention will now be described below with reference to the drawings. Members and regions having substantially the same function are denoted by the same reference numerals and described.

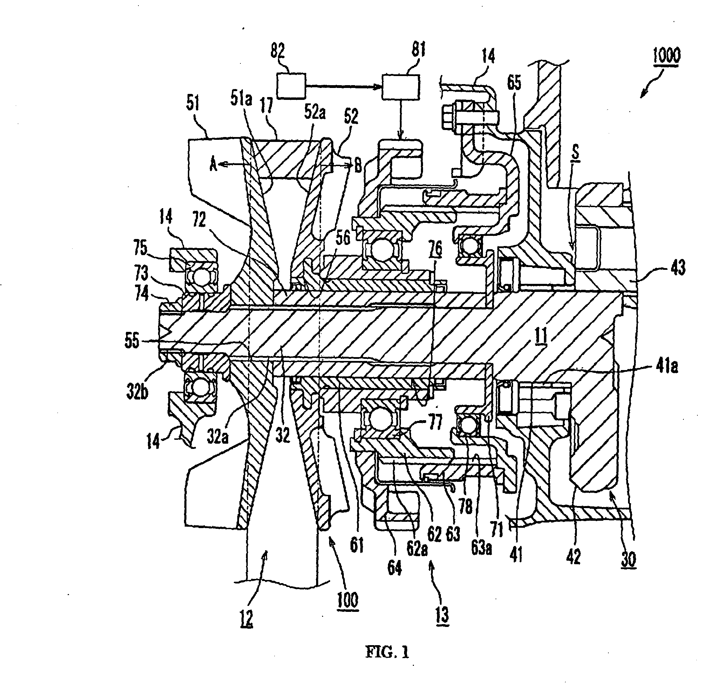

The inventors of the present invention have identified a problem in the art which has heretofore not been recognized, wherein the problem results in abrasion between, in particular, a crank portion of a shaft and a transmission casing. This problem is described in detail below with reference to Fig. 1 of the drawings.

Fig. 1 shows a portion around a primary sheave of a belt type continuously variable transmission 1000. In Fig. 1, the reference numeral 11 denotes a primary shaft, 12 a primary sheave, 13 a groove width regulating mechanism, 17 a V-belt, 30 a crank portion, 42 a crank web, 51 a stationary flange, and 52 a moving flange. Also, a slide bearing 41a is interposed between a crank journal 41 of the primary shaft 11 and a case 14, and a part of the case 14 is approximate to a side of the crank web 42 of the primary shaft 11.

The inventors of the present application have made endurance tests on the belt type continuously variable transmission 1000 having such construction. Consequently, it has been found that abrasion is in some cases generated in a region S, in which a side of the crank web 42 of the primary shaft 11 and the case 14 are approximate to each other. Such abrasion does not immediately endanger safety of a vehicle, on which such belt type continuously variable transmission 1000 is mounted, but it has been found that there is a possibility of causing a disadvantage that abnormal noise is generated, or lubricated parts, etc. are degraded in performance by abrasion powder, etc.

As shown in Fig. 1, the V-belt 17 is wound round a V-groove defined between the stationary flange 51 and the moving flange 52 on the primary sheave 12. When tension acts on the V-belt 17, components of a force act on inner side surfaces of the V-groove, so that a force acts in a direction in which the stationary flange 51 and the moving flange 52 are separated from each other in an axial direction. In the belt type continuously variable transmission 1000 shown in Fig. 1, an axial load A acting on the stationary flange 51 acts through a sleeve 73 and a luck nut 74 in a direction in which a primary shaft 11 is caused to shift leftward in Fig.

1. On the other hand, an axial load B acting on the moving flange 52 acts through the groove width regulating mechanism 13 in a direction in which the case 14 is caused to shift rightward in a region close to a crank web 42 in Fig. 1. In the case where a force acts in a direction in which the primary shaft 11 is caused to shift leftward in Fig. 1, and a force acts in a direction in which the case 14 is caused to shift rightward in Fig. 1, a side surface of the crank web 42 of the primary shaft 11 and a proximate portion S of the case 14 possibly contact each other and generate abrasion, and it is consequently thought that such phenomenon is responsible for abrasion.

Based on the examination described above, the inventors of the present invention have thought of various modifications which seek to restrict abrasion on proximate portions S of the crank web 42 and the case 14.

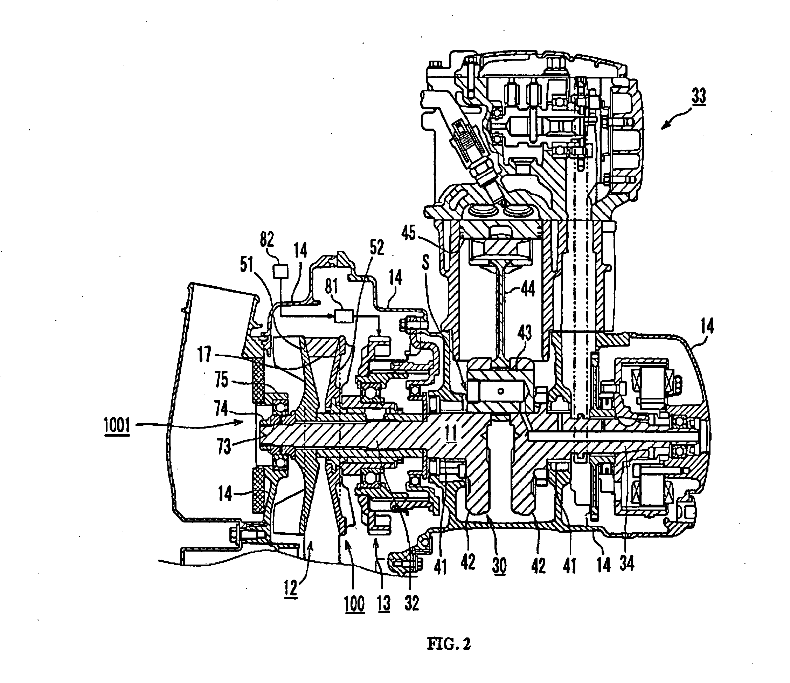

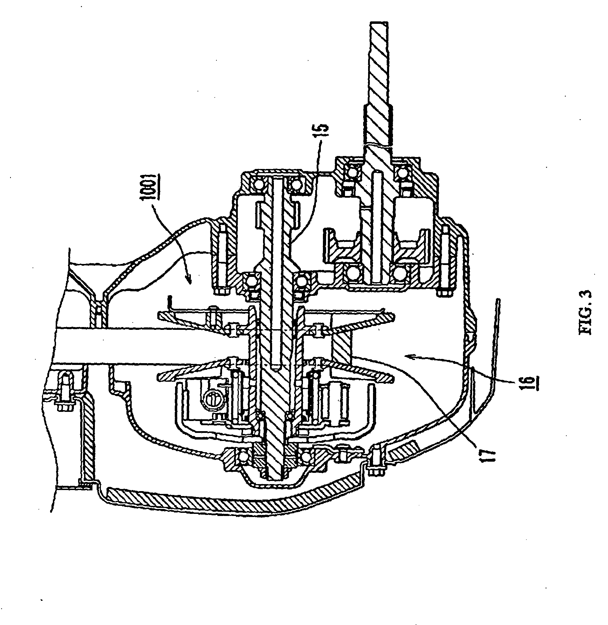

An explanation will now be given to a belt type continuously variable transmission 1001 , with reference initially to Figs. 2 and 3.

The belt type continuously variable transmission 1001 comprises a primary shaft 11, a primary sheave 12, a groove width regulating mechanism 13, a case 14, a secondary shaft 15, a secondary sheave 16, and a V-belt 17.

The V-belt 17 is wound round a V-groove of the primary sheave 12 and the secondary sheave 16 and a transmission gear ratio is controlled steplessly by changing a groove width of the primary sheave 12 and the secondary sheave 16.

More specifically, the primary shaft 11 includes a crank portion 30 and a first extension 32 extending on a first side of the crank portion 30 and mounting thereto the primary sheave 12 as shown in Fig. 2. A second extension extends from a second side of the crank portion, opposite to the first side. According to the embodiment, the primary shaft 11 is a crank shaft mounted to an engine 33 and provided substantially centrally thereof with the crank portion 30. The crank portion 30 connects thereto respective members, which constitute a crank journal 41, a crank web 42, a crank pin 43, a connecting rod 44, and a piston 45. The primary shaft 11 extends on both sides of the crank portion 30. Extensions 32, 34, respectively, on the both sides are rotatably supported on the case 14.

The primary sheave 12 and the groove width regulating mechanism 13, respectively, are mounted on the extension 32 extending on the left of the primary shaft 11 in Fig. 2. The extension 32 is formed with a spline 32a and at an end thereof with a male thread portion 32b, to which a lock nut 74 described later should be mounted.

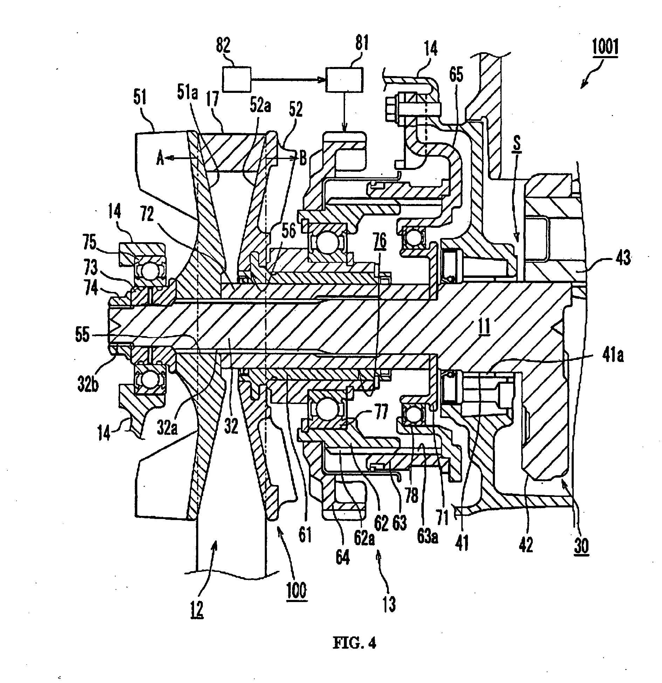

The primary sheave 12 is composed of a stationary flange 51 and a moving flange 52 as shown in enlarged scale in Fig. 4. The stationary flange 51 is fixedly arranged on a tip end side of the extension 32 and the moving flange 52 is arranged on a base end side of the extension 32 to be axially movable relative to the primary shaft 11. According to the embodiment, the stationary flange 51 and the moving flange 52 of the primary sheave 12 each comprise a substantially disk-shaped member and surfaces thereof opposed to each other in an axial direction are formed by respective conical surfaces 51a, 52a. A V-groove around which the V-belt 17 is wound is formed between the stationary flange 51 and the moving flange 52 by having the conical surfaces 51a, 52a opposed to each other.

The stationary flange 51 is formed centrally thereof with an insertion hole 55, through which the primary shaft 11 is inserted, and the insertion hole 55 is formed on an inner peripheral surface thereof with a spline, which corresponds to the spline 32a of the primary shaft 11. Also, the moving flange 52 is formed centrally thereof with a mount 56, which is mounted to the groove width regulating mechanism 13 described later.

In use, the groove width regulating mechanism 13 regulates the groove width of the primary sheave 12 by shifting the moving flange 52 axially as shown in Fig. 4. According to the embodiment, the groove width regulating mechanism 13 comprises a slider 61, a feed member 62, a guide member 63, a gear 64, and a stationary side support member 65.

The belt type continuously variable transmission 1001 comprises a rotating side support member 71, a first sleeve 72, a second sleeve 73, and a lock nut 74 as members, by which the primary sheave 12 and the groove width regulating mechanism 13 are mounted to the primary shaft 11.

As shown in Fig. 2, the case 14 covers the primary sheave 12 and the groove width regulating mechanism 13 and a part thereof is proximate to the crank web 42. Also, the case 14 rotatably supports the primary shaft 11 on a side of the primary sheave 12 toward the stationary flange 51 and supports the groove width regulating mechanism 13 on a side of the primary sheave 12 toward the moving flange 52. According to the embodiment, the case 14 is formed by joining a plurality of members and generally covers the primary shaft 11, the primary sheave 12, and the groove width regulating mechanism 13. A part of the case 14 extends to a position on the primary shaft 11 described above, which is proximate to the crank web 42.

With the belt type continuously variable transmission 1001 according to the embodiment, the stationary flange 51 is mounted to the primary shaft 11 in order of the rotating side support member 71, the first sleeve 72, the stationary flange 51, the second sleeve 73, and the lock nut 74 as shown in Fig. 4. The first sleeve 72 and the stationary flange 51, respectively, are mounted in a state of meshing with the spline 32a of the primary shaft 11 to rotate together with the primary shaft 11. The second sleeve 73 is mounted on the primary shaft 11 to have one end thereof abutting against the stationary flange 51 and caused by the lock nut 74, which screws with the male thread portion 32b formed on an end of the primary shaft 11, to be retained on the primary shaft 11. An end of the primary shaft 11 is rotatably supported by a bearing 75 mounted between the second sleeve 73 and the case 14.

The first sleeve 72 includes a guide mechanism 76 arranged in an axial direction. The slider 61 of the groove width regulating mechanism 13 is mounted on the first sleeve 72 so as to be shifted axially by the guide mechanism 76. The moving flange 52 is mounted on the slider 61. The feed member 62 and the gear 64 are mounted on the slider 61 through a bearing 77. Output of a motor 81 is input into the gear 64. Also, male threads 62a are formed on an outer peripheral surface of the feed member 62 to mesh with female threads 63a formed on an inner peripheral surface of the guide member 63 fixedly arranged on the case 14.

The guide member 63 of the groove width regulating mechanism 13 is mounted through a bearing 78 to the rotating side support member 71 mounted to the primary shaft 11 and mounted to the stationary side support member 65 fixedly arranged on the case 14. Thereby, the guide member 63 is fixedly arranged on the case 14 in spite of rotation of the primary shaft 11. In addition, according to the embodiment, the bearing 78 is mounted axially slidably between the stationary side support member 65 and the rotating side support member 71. The rotating side support member 71 is fixed to the primary shaft 11 and the stationary side support member 65 is fixed to the case 14. When the primary shaft 11 shifts axially relative to the case 14, the rotating side support member 71 correspondingly shifts axially relative to stationary side support member 65.

The groove width regulating mechanism 13 causes the moving flange 52 to shift together with the slider 61 in an axial direction according to rotation of the motor 81 and meshing of the feed member 62 and the guide member 63.

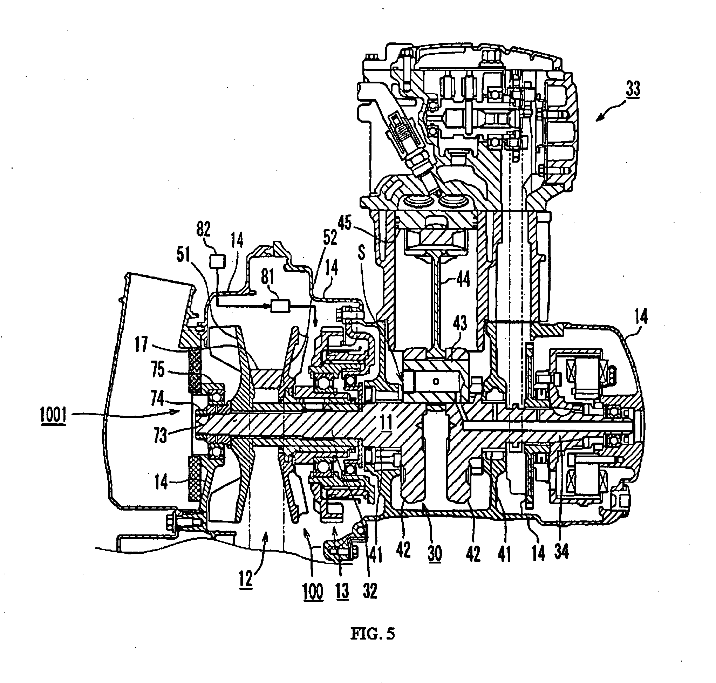

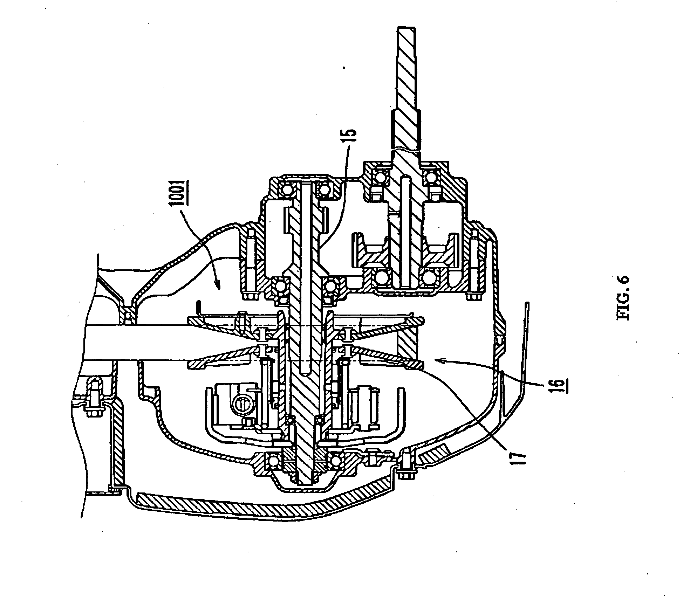

The V-belt 17 is wound round the V-groove defined by the stationary flange 51 and the moving flange 52 of the primary sheave 12. As shown in Fig. 3, the V-belt 17 is wound round the secondary sheave 16 mounted on the secondary shaft 15. A spring mounted to the moving flange 52 regulates the groove width of the secondary sheave 16 to a groove width conformed with variation in groove width of the primary sheave 12. That is, the groove width of the primary sheave 12 is varied according to rotation of the motor 81 controlled by a control device 82, and in the case where the primary sheave 12 is narrow in groove width, the secondary sheave 16 is increased in groove width as shown in Figs. 2 and 3. On the contrary, when the primary sheave 12 is increased in groove width, the secondary sheave 16 is decreased in groove width as shown in Figs. 5 and 6.

According to the embodiment, in the region S, in which the crank web 42 and the case 14 are proximate to each other, a clearance between the crank web 42 and the case 14 is provided. This clearance is sufficient to accommodate the amount of shift experienced by the case 14 between a condition where no tension acts on the V-belt 17 and a condition where tension acts on the V-belt 17 to generate an axial load on the primary sheave 12.

Tension within the V-belt 17 generates a force which acts in a direction in which the stationary flange 51 and the moving flange 52 of the primary sheave 12 are separated axially from each other. According to the embodiment, the axial load A acting on the stationary flange 51 acts through the second sleeve 73 and the lock nut 74 to shift the primary shaft 11 leftward in Fig. 4. In contrast, the axial load B acting on the moving flange 52 is transmitted through the slider 61, the bearing 77, the feed member 62, the guide member 63, and the stationary side support member 65 to a portion of the case 14, which is approximate to the crank web 42, to act in a region approximate the crank web 42 to shift the case 14 rightward in Fig. 4.

Therefore, when the V-belt 17 is in tension and a force acts in a direction in which the stationary flange 51 and the moving flange 52 of the primary sheave 12 are separated axially from each other, the crank web 42 shifts leftward in the region S, and the case 14 shifts rightward. Thus, the distance between the crank web 42 and case 14 decreases.

According to the embodiment, since the clearance S between the case 14 and the crank web 42 is made larger than the possible shift of the case 14 relative to the primary shaft 11 caused by an axial load, which axial load is caused by tension acting on the V-belt 17 to act on the primary sheave 12, the case 14 and the crank web 42 do not contact with each other, so that it is possible to prevent abrasion from being generated in the region S, in which the crank web 42 and the case 14 are proximate to each other.

Thereby, it is possible to prevent generation of a disadvantage attributable to abrasion in the region S in the belt type continuously variable transmission 1001.

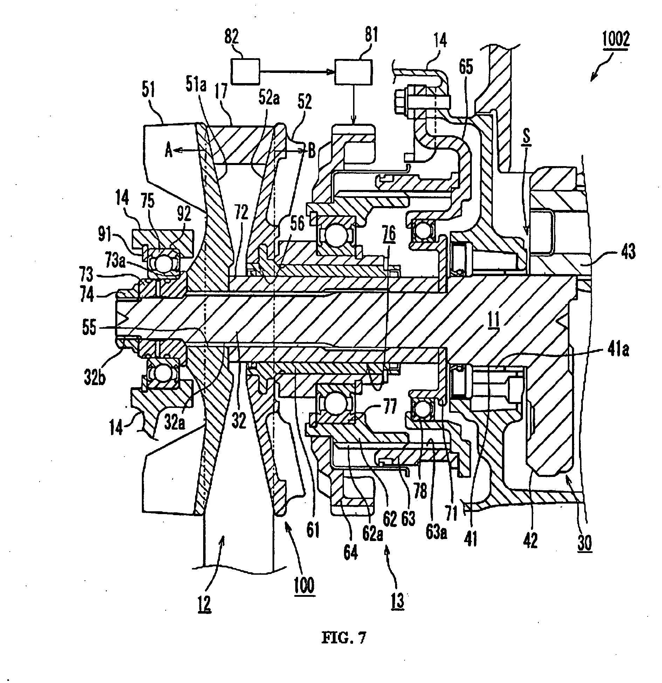

A second embodiment will now be described with reference to Fig. 7.

A belt type continuously variable transmission 1002 according to a second embodiment of the invention, comprises a second sleeve 73 mounted on the primary shaft 11 to abut against the stationary flange 51 of the primary sheave 12, and a bearing 75 mounted between the second sleeve 73 and the case 14 and having an outer ring fixed to the case 14.

The second sleeve 73 is mounted on the primary shaft 11 to abut against the stationary flange 51 of the primary sheave 12. The bearing 75 has an inner ring mounted to the second sleeve 73 and an outer ring mounted to the case 14, and is fixed to the case 14 with a circlip 91 mounted to an inner peripheral surface of the case 14.

In the example shown in Fig. 7, a flange 73a is formed on a right end of an outer peripheral surface of the second sleeve 73 and the bearing 75 abuts against the flange 73a. Further, a portion of the case 14 which engages the bearing 75 is provided with a bearing portion 92, on which the bearing 75 is seated, in a deep side in a direction, in which the bearing 75 is mounted. The circlip 91 fixes the bearing 75 to the case 14.

A force A acting on the stationary flange 51 of the primary sheave 12 is transmitted to the case 14 through the flange 73a of the second sleeve 73, the bearing 75, and the circlip 91. In contrast, a force B acting on the moving flange 52 is transmitted to the case 14 through the slider 61, the bearing 77, the feed member 62, the guide member 63, and the stationary side support member 65. In this manner, both the force A acting on the stationary flange 51 and the force B acting on the moving flange 52 are transmitted to the case 14 to be supported by the case 14. At this time, it is thought that a minute, elastic deformation is generated on the case 14. According to the present embodiment, the clearance S between the case 14 and the crank web 42 is made larger than a distance by which the case 14 approaches the crank web 42 due to such elastic deformation. Therefore, the case 14 and the crank web 42 do not contact with each other, so that it is possible to prevent abrasion from being generated in the region S, in which the crank web 42 and the case 14 are proximate to each other.

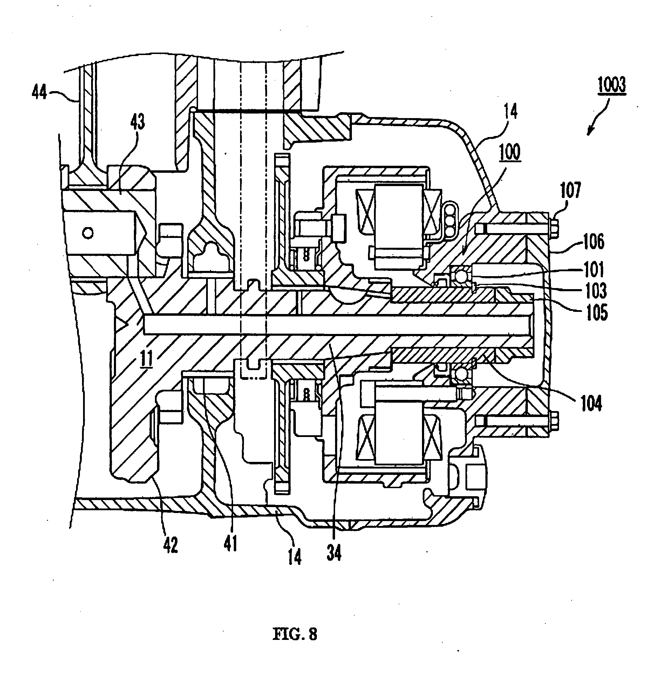

A third embodiment will now be described with reference to Fig. 8.

A belt type continuously variable transmission 1003 according to a third embodiment, comprises shift inhibiting means 100 provided on a second extension 34, which extends from a second side of the crank portion 30 which is opposite to that on which the primary sheave 12 is mounted, to inhibit the primary shaft 11 from shifting relative to the case 14 toward the side on which the primary sheave 12 is mounted.

In this case, leftward shifting of the primary shaft 11 can be restricted to a small amount by the shift inhibiting means 100. Thereby, it is unlikely that the case 14 and the crank web 42 will be able to come into contact with each other in the region S (see Fig. 2), in which the crank web 42 and the case 14 are proximate to each other, so that it is possible to further surely prevent abrasion from being generated in the region S.

In the embodiment shown in Fig. 8, the shift inhibiting means 100 adopts a construction in which a bearing 101 is mounted between the primary shaft 11 (second extension 34) and the case 14.

A sleeve 104 is mounted to the primary shaft 11 and the bearing 101 is mounted between the sleeve 104 and the case 14. A lock nut 105 is mounted to an end of the primary shaft 11 to secure the sleeve 104 in place. An inner peripheral surface of the case 14 inhibits an outer ring of the bearing 101 from shifting relative to the case 14 leftward in Fig. 8. Further, a circlip 103 mounted to the sleeve 104 inhibits an inner ring of the bearing 101 from shifting relative to the sleeve 104 rightward in Fig. 8. In addition, according to the present embodiment, a separate member 106 defines a right side of the case 14 so that the sleeve 104, the bearing 101, the lock nut 105, etc. can be mounted to the primary shaft 11, the separate member 106 being mounted to the right side by bolts 107.

The circlip 103 causes the bearing 101 to engage with the primary shaft 11 and the case 14 on the extension 34, and so the primary shaft 11 is inhibited from shifting relative to the case 14 toward that side (leftward in Fig. 8) on which the primary sheave 12 is mounted. Thereby, leftward shifting of the primary shaft 11 can be restricted to a small amount and as such it is unlikely that the case 14 and the crank web 42 will contact each other in the region S (see Fig. 2) so that it is possible to further surely prevent abrasion from being generated in the region S.

While the shift inhibiting means 100 provided on the extension 34 has been illustrated, the shift inhibiting means 100 is not limited to the embodiment described above.

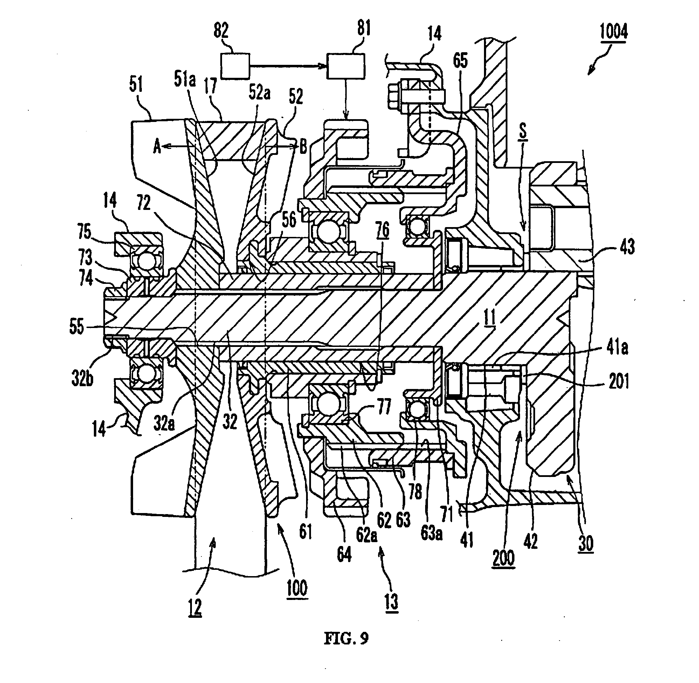

An embodiment of the invention will now be described with reference to Fig. 9.

A belt type continuously variable transmission 1004 according to the invention, comprises abrasion preventing means 200, which prevents the case 14 from contacting with the crank web 42 to abrade in the region S, in which the crank web 42 and the case 14 are proximate to each other.

A thrust washer 201 is mounted as the abrasion preventing means 200 between the crank web 42 and the case 14.

The case 14 and the crank web 42 do not contact directly with each other in the region S, and the thrust washer 201 interposes therebetween, whereby abrasion generated in the region S can be moderated to such an extent that any disadvantage is not caused.

While the thrust washer 201 suffices to be interposed between the crank web 42 and the case 14, not only one washer but also plural washers may be mounted.

In addition, in place of the thrust washer 201, a thrust bearing may be mounted as the abrasion preventing means 200 between the crank web 42 and the case 14. In this case, since the thrust bearing can bear a force acting axially between the crank web 42 and the case 14, the crank web 42 and the case 14 do not contact with each other and so it is possible to surely prevent abrasion from being generated in the region S.

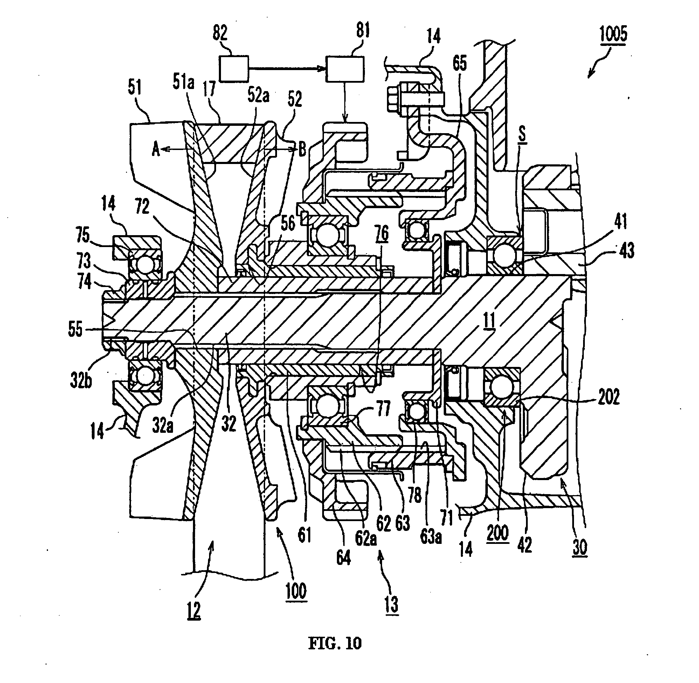

A further embodiment of the invention will now be described with reference to Fig. 10.

A belt type continuously variable transmission 1005 according to the invention, comprises a bearing 202 mounted as the abrasion preventing means 200 between the primary shaft 11 and the case 14 in the region S, in which the crank web 42 and the case 14 are proximate to each other.

The bearing 202 is mounted between the primary shaft 11 and the case 14 in the region S so that the bearing 202 can regulate the relative positional relationship between the case 14 and the primary shaft 11. Therefore, it is possible to surely prevent contact between the crank web 42 and the case 14, thus enabling surely preventing abrasion from being generated in the region S. For such bearing 202, for example, a ball bearing may be adopted. In one embodiment an angular contact radial bearing capable of corresponding to a force acting in a thrust direction may be used.

While there has been illustrated the abrasion preventing means 200, which prevents the case 14 from contacting with the crank web 42 to abrade in the region S the abrasion preventing means 200 is not limited to the embodiment described above.

While embodiments of belt type continuously variable transmissions have been illustrated, the belt type continuously variable transmission is not limited to the embodiments.

For example, it is possible to combine together a construction shown in Fig. 7, in which the second sleeve 73 is mounted to the primary shaft 11 to abut against the stationary flange 51 of the primary sheave 12 and the outer ring of the bearing 75 mounted between the second sleeve 73 and the case 14 is fixed to the case 14, and a construction shown in Fig. 8, in which the shift inhibiting means 100 is provided on the extension 34, which extends from the crank portion 30 on an opposite side to that side, on which the primary sheave 12 is mounted, to inhibit the primary shaft 11 from shifting relative to the case 14 toward that side, on which the primary sheave 12 is mounted.

Thereby, both constructions comprise one, in which the primary shaft 11 is restricted to a small extent in shifting so that the crank web 42 approaches the case 14 in the region S. When both constructions are combined together, both constructions cooperate with each other to enable further surely restricting the primary shaft 11 to a small extent in shifting so that the crank web 42 approaches the case 14 in the region S.

Further, both constructions, respectively, shown in Figs. 7 and 8 can combine the abrasion preventing means described above. In this case, since the both constructions shown in Figs. 7 and 8 comprise one, in which the primary shaft 11 is restricted to a small extent in shifting so that the crank web 42 approaches the case 14 in the region S, the abrasion preventing means 200 (for example, thrust washer, thrust bearing, radial bearing) arranged in the region Scan be caused to function further appropriately, so that it is possible not only to surely prevent abrasion from being generated in the region S, but also to make an operation of the belt type continuously variable transmission further smooth and to further effectively decrease generation of abnormal noise, etc.

Also, while there has been illustrated a construction in which the bearing mounted between the primary shaft and the case is caused by a sleeve, or a circlip to engage with the primary shaft and the case, it is possible to adopt other constructions, such as one in which a bearing engages with a primary shaft and a case.

As described above, the belt type continuously variable transmission according to the invention can be widely made use of as a belt type continuously variable transmission for vehicles, such as straddle-type vehicles.

### Description of Reference Numerals and Signs

11: primary shaft
12: primary sheave
13: groove width regulating mechanism
14: case
15: secondary shaft
16: secondary sheave
17: V-belt
30: crank portion
32: first extension
32a: spline
33: engine
34: second extension
41: crank journal
41a: slide bearing
42: crank web
43: crank pin
44: connecting rod
45: piston
51: stationary flange
52: moving flange
55: insertion hole
56: mount
61: slider
62: feed member
63: guide member
64: gear
65: stationary side support member
71: rotating side support member
72: first sleeve
73: second sleeve
73a: flange
74: lock nut
75: bearing
76: guide mechanism
77: bearing
78: bearing
81: motor 82: control device
91: circlip
92: bearing portion
100: shift inhibiting means
101: bearing
103: engagement member (circlip)
200: abrasion preventing means
201: thrust washer
202: bearing
1000: belt type continuously variable transmission
1001: belt type continuously variable transmission according to first embodiment
1002: belt type continuously variable transmission according to second embodiment
1003: belt type continuously variable transmission according to third embodiment
1004: belt type continuously variable transmission according to fourth embodiment
1005: belt type continuously variable transmission according to fifth embodiment
A: axial load
B: axial load
S: region, in which crank web and case are proximate to each other

## Claims

1. A belt type continuously variable transmission (1001, 1002, 1003, 1004, 1005) comprising:
a primary shaft (11) including a crank portion (30) provided with a crank web (42), and a first extension (32) extending on a first side of the crank portion (30);
a primary sheave (12) including a stationary flange (51) fixedly mounted on the first extension (32) and a moving flange (52) axially moveably mounted relative to the first extension (32), wherein a primary sheave groove is defined between the stationary flange (51) and the moving flange (52);
a groove width regulating mechanism (13), which shifts the moving flange (52) axially to thereby regulate the primary sheave groove width to vary a transmission ratio;
a belt (17) received within the primary sheave groove;
a case (14) covering the primary sheave (12) and the groove width regulating mechanism (13), wherein a portion of the case (14) is proximate to a portion of the crank web (42) with a clearance defined therebetween; and **characterized in that** the belt type continuously variable transmission comprises
abrasion preventing means (200) for preventing the proximate portions of the case (14) and crank web (42) from contacting each other due to a force acting in a direction in which the stationary flange (51) and the moving flange (52) are separated from each other in an axial direction when tension acts on the belt (17);
the case (14) rotatably supports the groove width regulating mechanism (13) on a moving flange side of primary sheave (12); and
the abrasion preventing means (200) comprises a bearing (202) or thrust washer (201) mounted between the proximate portions of the crank web (42) and the case (14).

2. The belt type continuously variable transmission (1001, 1002, 1003, 1004, 1005) according to claim 1, wherein the clearance between the proximate portions of the case (14) and crank web (42) is an axial clearance.

3. The belt type continuously variable transmission (1001, 1002, 1003, 1004, 1005) according to claim 1 or 2, wherein the stationary flange (51) is mounted on a tip end side of the first extension (32).

4. The belt type continuously variable transmission (1001, 1002, 1003, 1004, 1005) according to claim 1, 2 or 3, wherein the moving flange (52) is mounted on a base end side of the first extension (32).

5. The belt type continuously variable transmission (1001, 1002, 1003, 1004, 1005) according to any preceding claim, wherein the case (14) rotatably supports the primary shaft (11) on a stationary flange side of the primary sheave (12) and supports the groove width mechanism (13) on a moving flange side of the primary sheave (12).

6. The belt type continuously variable transmission (1001, 1002, 1003, 1004, 1005) according to any preceding claim, further comprising:
a sleeve (73) mounted to the primary shaft (11) to abut against the stationary flange (51) of the primary sheave (12), and
a bearing (75) mounted between the sleeve (73) and the case (14) and having an outer ring thereof fixed to the case (14).

7. A vehicle comprising a belt type continuously variable transmission (1001, 1002, 1003, 1004, 1005) according to any preceding claim.

## Patentansprüche

1. Kontinuierlich veränderliches Riemengetriebe (1001, 1002, 1003, 1004, 1005), das Folgendes umfasst:
eine Primärwelle (11), die einen Kurbelabschnitt (30), der mit einer Kurbelwange (42) versehen ist, und eine erste Verlängerung (32), die sich auf einer ersten Seite des Kurbelabschnittes (30) erstreckt, einschließt,
eine Primärscheibe (12), die einen unbeweglichen Flansch (51), der feststehend an der ersten Verlängerung (32) angebracht ist, und einen sich bewegenden Flansch (52), der in Axialrichtung beweglich im Verhältnis zu der ersten Verlängerung (32) angebracht ist, einschließt, wobei eine Primärscheibenrille zwischen dem unbeweglichen Flansch (51) und dem sich bewegenden Flansch (52) definiert wird,
ein Rillenbreiten-Regulierungsmechanismus (13), der den sich bewegenden Flansch (52) in Axialrichtung verschiebt, um **dadurch** die Primärscheibenrillenbreite zu regulieren, um ein Übersetzungsverhältnis zu verändern,
einen Riemen (17), der innerhalb der Primärscheibenrille aufgenommen wird,
eine Verkleidung (14), welche die Primärscheibe (12) und den Rillenbreiten-Regulierungsmechanismus (13) abdeckt, wobei sich ein Abschnitt der Verkleidung (14) benachbart zu einem Abschnitt der Kurbelwange (42) befindet, wobei ein Zwischenraum zwischen denselben definiert wird, und **dadurch gekennzeichnet, dass** das kontinuierlich veränderliche Riemengetriebe Folgendes umfasst:
Abriebverhinderungsmittel (200), um zu verhindern, dass die benachbarten Abschnitte der Verkleidung (14) und der Kurbelwange (42) einander auf Grund einer Kraft berühren, die in einer Richtung wirkt, in welcher der unbewegliche Flansch (51) und der sich bewegende Flansch (52) in einer axialen Richtung voneinander getrennt werden, wenn eine Spannung auf den Gurt (17) wirkt,
wobei die Verkleidung (14) den Rillenbreiten-Regulierungsmechinismus (13) auf einer Seite des sich bewegenden Flanschs der Primärscheibe (12) drehbar trägt, und
wobei die Abriebverhinderungsmittel (200) ein Lager (202) oder eine Druckscheibe (201) umfassen, die zwischen den benachbarten Abschnitten der Kurbelwange (42) und der Verkleidung (14) angebracht sind.

2. Kontinuierlich veränderliches Riemengetriebe (1001, 1002, 1003, 1004, 1005) nach Anspruch 1, wobei der Zwischenraum zwischen den benachbarten Abschnitten der Verkleidung (14) und der Kurbelwange (42) ein axialer Zwischenraum ist.

3. Kontinuierlich veränderliches Riemengetriebe (1001, 1002, 1003, 1004, 1005) nach Anspruch 1 oder 2, wobei der unbewegliche Flansch (51) auf einer Seite des Spitzenendes der ersten Verlängerung (32) angebracht ist.

4. Kontinuierlich veränderliches Riemengetriebe (1001, 1002, 1003, 1004, 1005) nach Anspruch 1, 2 oder 3, wobei der sich bewegende Flansch (52) auf einer Seite des Basisendes der ersten Verlängerung (32) angebracht ist.

5. Kontinuierlich veränderliches Riemengetriebe (1001, 1002, 1003, 1004, 1005) nach einem der vorhergehenden Ansprüche, wobei die Verkleidung (14) die Primärwelle (11) auf einer Seite des unbeweglichen Flanschs der Primärscheibe (12) drehbar trägt und den Rillenbreiten-Regulierungsmechanismus (13) auf einer Seite des sich bewegenden Flanschs der Primärscheibe (12) trägt.

6. Kontinuierlich veränderliches Riemengetriebe (1001, 1002, 1003, 1004, 1005) nach einem der vorhergehenden Ansprüche, das ferner Folgendes umfasst:
eine Buchse (73), die an der Primärwelle (11) angebracht ist, so dass sie an den unbeweglichen Flansch (51) der Primärscheibe (12) anstößt, und
ein Lager (75), das zwischen der Buchse (73) und der Verkleidung (14) angebracht ist und einen äußeren Ring desselben an der Verkleidung (14) befestigt hat.

7. Fahrzeug, das ein kontinuierlich veränderliches Riemengetriebe (1001, 1002, 1003, 1004, 1005) nach einem der vorhergehenden Ansprüche umfasst.

## Revendications

1. Transmission à variation continue du type à courroie (1001, 1002, 1003, 1004, 1005), comprenant :
un arbre primaire (11), englobant une partie de vilebrequin (30) comportant un flasque de vilebrequin (42) et une première extension (32), s'étendant sur un premier côté de la partie de vilebrequin (30) ;
une poulie primaire (12) englobant une bride stationnaire (51), montée de manière fixe sur la première extension (32), et une bride mobile (52), montée de manière à pouvoir se déplacer axialement par rapport à la première extension (32), une gorge de poulie primaire étant définie entre la bride stationnaire (51) et la bride mobile (52) ;
un mécanisme de réglage de la largeur de la gorge (13), entraînant un déplacement axial de la bride mobile (52), pour régler ainsi la largeur de la gorge de la poulie primaire afin de changer un rapport de transmission ;
une courroie (17), reçue dans la gorge de la poulie primaire ;
un carter (14), recouvrant la poulie primaire (12) et le mécanisme de réglage de la largeur de la gorge (13), une partie du carter (14) étant agencée à proximité d'une partie du flasque du vilebrequin (42), un dégagement étant défini entre elles ; et **caractérisée en ce que** la transmission à variation continue du type à courroie comprend :
un moyen empêchant une abrasion (200), pour empêcher un contact entre des parties proches du carter (14) et le flasque du vilebrequin (42) par suite d'une force agissant dans une direction dans laquelle la bride stationnaire (51) et la bride mobile (52) sont séparées l'une de l'autre dans une direction axiale, lors de l'application d'une tension à la courroie (17) ;
le carter (14) supportant de manière rotative le mécanisme de réglage de la largeur de la gorge (13) sur un côté de la bride mobile de la poulie primaire (12) ; et
le moyen empêchant une abrasion (200) comprenant un palier (202) ou une rondelle de butée (201), monté entre les parties proches du flasque du vilebrequin (42) et le carter (14).

2. Transmission à variation continue du type à courroie (1001, 1002, 1003, 1004, 1005) selon la revendication 1, dans laquelle le dégagement entre les parties proches du carter (14) et le flasque du vilebrequin (42) est un dégagement axial.

3. Transmission à variation continue du type à courroie (1001, 1002, 1003, 1004, 1005) selon les revendications 1 ou 2, dans laquelle la bride stationnaire (51) est montée sur un côté d'extrémité de pointe de la première extension (32).

4. Transmission à variation continue du type à courroie (1001, 1002, 1003, 1004, 1005) selon les revendications 1, 2 ou 3, dans laquelle la bride mobile (52) est montée sur un côté d'extrémité de base de la première extension (32).

5. Transmission à variation continue du type à courroie (1001, 1002, 1003, 1004, 1005) selon l'une quelconque des revendications précédentes, dans laquelle le carter (14) supporte de manière rotative l'arbre primaire (11) sur un côté de la bride stationnaire de la poulie primaire (12) et supporte le mécanisme de réglage de la largeur de la gorge (13) sur un côté de la bride mobile de la poulie primaire (12).

6. Transmission à variation continue du type à courroie (1001, 1002, 1003, 1004, 1005) selon l'une quelconque des revendications précédentes, comprenant en outre :
un manchon (73), monté sur l'arbre primaire (11), destiné à buter contre la bride stationnaire (51) de la poulie primaire (12) ; et
un palier (75), monté entre le manchon (73) et le carter (14), une bague externe de celui-ci étant fixée sur le carter (14).

7. Véhicule, comprenant une transmission à variation continue du type à courroie (1001, 1002, 1003, 1004, 1005) selon l'une quelconque des revendications précédentes.
